# EUROPEAN PATENT SPECIFICATION

(11) **EP 1 273 508 B1**
(45) Date of publication and mention of the grant of the patent: **29.09.2004**
(21) Application number: 01202618.3
(22) Date of filing: 06.07.2001
(51) Int. Cl.: B62K 25/28

(54) **Rear shock absorbing assembly for a bicycle**
Hinterradfederung für ein Fahrrad
Suspension de la roue arrière d'une bicyclette

(43) Date of publication of application: 08.01.2003
(73) Proprietor: MERIDA INDUSTRY CO., LTD., Meikang Village, Tatsun Hsiang, Changhua Hsien (TW)
(72) Inventor: Tseng, Diing-Huang, Tatsun Hsiang, Changhua Hsien (TW)
(74) Representative: Prins, Adrianus Willem, Mr. Ir.

(56) References cited:
- FR-A- 923 235
- US-A- 4 457 393
- US-A- 5 403 028
- US-A- 5 678 837

## Description

### 1. Field of the Invention

The present invention relates to a shock absorbing assembly, and more particularly to a rear shock absorbing assembly for a bicycle, which has a leverage near unity.

### 2. Description of Related Art

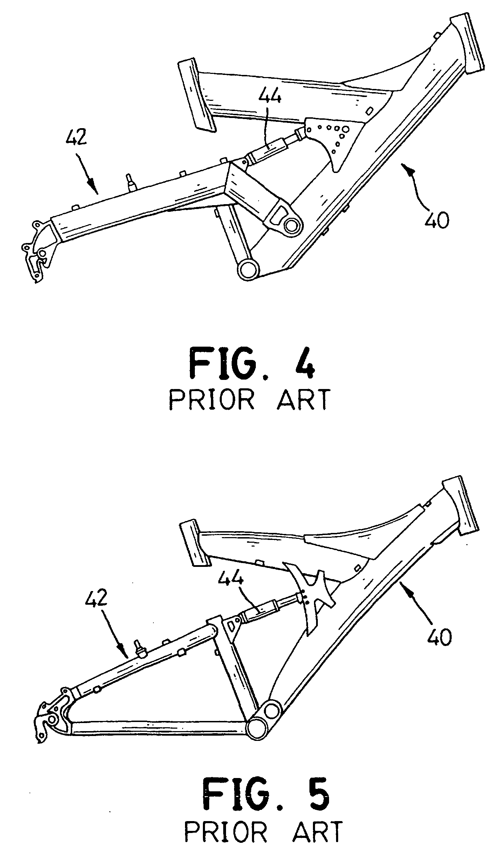

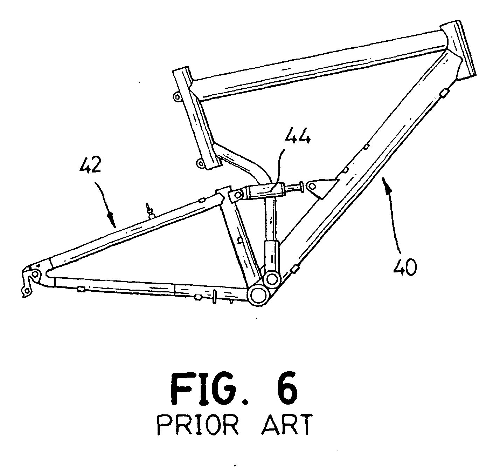

To increase the comfort of riding a modern bicycle, a shock absorbing assembly is always mounted between the frame and the rear wheel of the bicycle. With reference to Figs. 4 to 6, each of three types of conventional rear shock absorbing assemblies in accordance with the prior art comprises a rear fork (42) and a shock absorber (44). One end of the rear fork (42) is pivotally connected to the frame (40). The rear wheel (not shown) of the bicycle is rotatably mounted on the other end of the rear fork (42). The shock absorber (44) is pivotally connected between the frame (40) and the rear fork (42).
Accordingly, when the rear wheel bumps an object, the rear fork (42) will pivot relative to the frame (40) and press the shock absorber (44). The shock absorber (44) can absorb the shock applied to the rear wheel to keep the shock from being transported to the frame (40). Riding the bicycle is more comfortable, and steering the bicycle is also improved.

However, the leverage of the conventional rear shock assembly is in the range of 2.5 to 5, where the leverage is a ratio of the distance between the center of the rear wheel and the pivot between the frame (40) and the rear fork (42) to the distance between the pivot between the rear fork (42) and the shock absorber (44) and the pivot between the frame (40) and the rear fork (42). In another words, when one-unit of force is applied to the rear wheel, there will be 2.5 to 5 units of force applied to the shock absorber (44). As the leverage of the rear shock assembly is increased, the shock absorber (44) must bear a larger force. When the leverage is large, the shock absorber (44) is easily damaged, and the useful life of the shock absorber (44) is reduced.

In addition, to bear a large force, a spring with a high coefficient of elasticity must be used in the shock absorber (44). The weight and the cost of the shock absorber (44) increases.

Another conventional rear shock assembly for a bicycle is shown in US-A-4,457,393.

The main objective of the invention is to provide an improved rear shock assembly for a bicycle, which has leverage near unity to reduce the force applied to the shock absorber. The rear shock assembly has a pair of chain stays, a pair of seat stays, a lever and a shock absorber. The chain stays are pivotally connected to a bicycle frame. A rear fork tip is formed on one end of each chain stay. One end of each seat stay is pivotally connected to one of the rear fork tips. The lever has a center connection point, a first end and a second end. The center connection point of the lever is pivotally connected to the bicycle frame. The pair of seat stays are pivotally connected to the first end of the lever. The shock absorber is pivotally connected between the second end of the lever and one of the rear fork tips. With such an arrangement and compared to the conventional rear shock absorber assembly, the leverage of the rear shock assembly is reduced to nearly unity. The force applied to the shock absorber is reduced. The useful life of the shock absorber is prolonged.

Other objects, advantages and novel features of the invention will become more apparent from the following detailed description when taken in conjunction with the accompanying drawings.

### IN THE DRAWINGS

Fig. 1 is a side plan view of a bicycle frame with a rear shock absorber assembly in accordance with the present invention;
Fig. 2 is an enlarged side plan view of the rear shock absorber assembly in Fig. 1;
Fig. 3 is an operational side plan view of the rear shock absorber assembly in Fig. 1;
Fig. 4 is a side plan view of a first embodiment of a bicycle frame with a conventional rear shock absorber assembly in accordance with the prior art;
Fig. 5 is a side plan view of a second embodiment of a bicycle frame with a conventional rear shock absorber assembly in accordance with the prior art; and
Fig. 6 is a side plan view of a third embodiment of a bicycle frame with a conventional rear shock absorber assembly in accordance with the prior art.

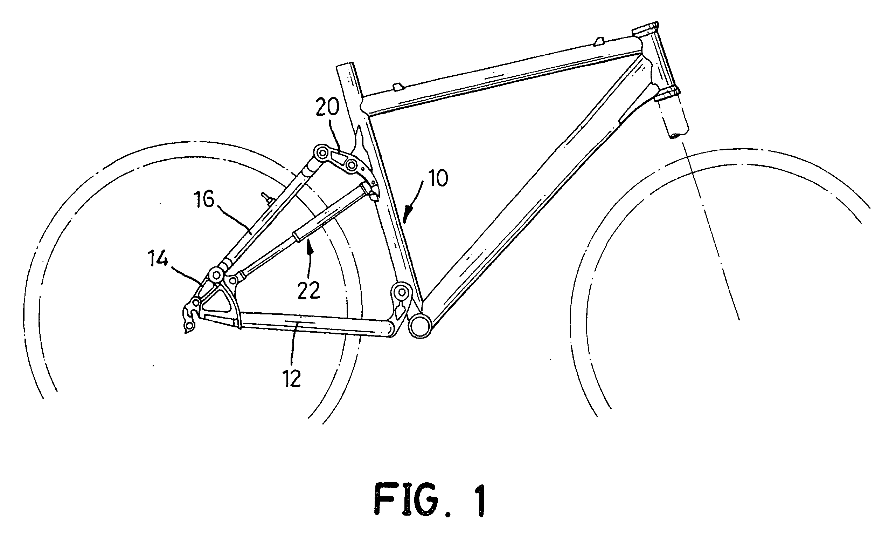

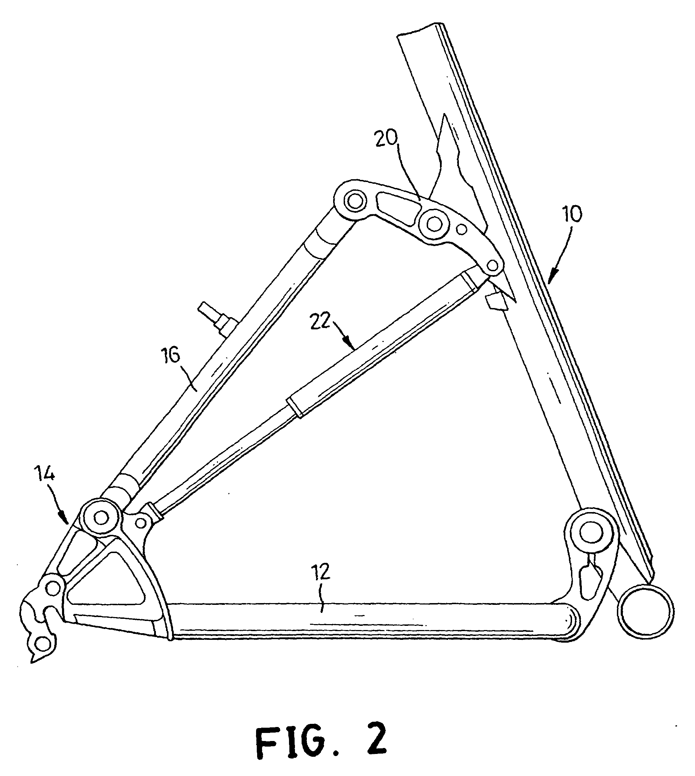

With reference to Figs. 1 and 2, a rear shock assembly in accordance with the present invention comprises a pair of chain stays (12), a pair of seat stays (16), a lever (20) and a shock absorber (22). The chain stays (12) have a first end and a second end with the first end pivotally connected to a bicycle frame (10) and a rear fork tip (14) formed on the second end. The rear wheel (not numbered) of the bicycle is rotatably attached to the rear fork tips (14). One end of each seat stay (16) is pivotally connected to one of the rear fork tips (14).

The lever (20) has a central connection point, a first end and a second end. The central connection point is pivotally connected to the bicycle frame (10). The first end of the lever (20) is pivotally connected to the pair of seat stays (16). The shock absorber (22) is pivotally connected between the second end of the lever (20) and one of the rear fork tips (14).

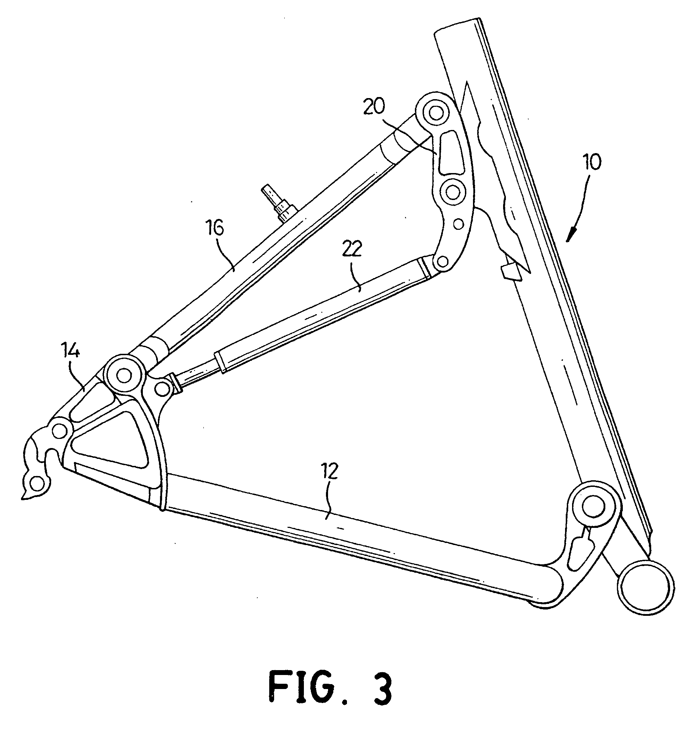

With reference to Figs. 2 and 3, when the rear wheel bumps an object and a force applied to the rear wheel, the rear wheel and the chain stays (12) with the rear fork tips (14) will pivot relative to the frame (10). The lever (20) will pivot relative to the frame (10) when the first end of the lever (20) is pressed by the seat stays (16), and the second end of the lever (20) will compressed the shock absorber (22). This can keep the force from being transmitted directly to the frame (10), so riding the bicycle becomes more comfortable.

Because the seat stays (16) and the shock absorber (22) are respectively pivotally connected to the opposite ends of the lever (20) and the center of the lever (20) is pivotally connected to the frame (10), the leverage between the seat stays (16) and the shock absorber (22) is near unity, where the leverage is the ratio of the distance between the first end and the middle portion of the lever (20) to the distance between the second end and the middle portion of the lever (20). In another words, when one unit of force is applied to the rear wheel, the force applied to the shock absorber (22) is limited to very nearly one unit. Compared to the conventional shock absorber assembly, the force applied to the shock absorber (22) is reduced. The useful life of the shock absorber (22) will be prolonged.

Because the shock absorber (22) only needs to bear a small force when the bicycle is being ridden, a shock absorber (22) with a spring with a low coefficient of elasticity can provide a good shock absorbing effect to the bicycle. The weight and the cost of the shock absorber (22) are reduced. In addition, a hydraulic or a pneumatic shock absorber that always has a low shock absorbing effect can be used with the shock absorbing assembly.

## Claims

1. A rear shock assembly for a bicycle comprising:
a pair of chain stays (12) adapted to be pivotally connected to a frame (10) of the bicycle and having a rear fork tip (14) formed on one end of each chain stay (12);
a pair of seat stays (16) with one end of each seat stay (16) pivotally connected to one of the rear fork tips (14);
a lever (20) adapted to be pivotally connected to the bicycle frame (10) and having a central connecting point, a first end pivotally connected to the pair of seat stays (16), and a second end;
a shock absorber (22) pivotally connected between the second end of the lever (20) and one of the rear fork tips (14).

2. The rear shock assembly as claimed in claim 1, wherein the central connection point of the lever (20) is adapted to be pivotally connected to the frame (10) of the bicycle.

## Patentansprüche

1. Hlntere Stoßdämpfergruppe für ein Fahrrad mit
einem Paar Hinterradgabeln (12), die dafür geeignet sind, mit einem Rahmen (10) des Fahrrads drehgelenkig verbunden zu werden, und die eine hintere Gabelspitze (14) haben, die an einem Ende jeder Hinterradgabel (12) ausgebildet ist;
einem Paar Hintergabelstreben (16), wobei ein Ende jeder Hintergabelstrebe (16) mit einer der hinteren Gabelspitzen (14) drehgelenkig verbunden ist;
einem Hebel (20), der dafür geeignet ist, mit dem Fahrradrahmen (10) drehgelenkig verbunden zu werden, und der einen mittleren Verbindungspunkt, ein mit dem Paar Hintergabelstreben (16) drehgelenkig verbundenes erstes Ende und ein zweites Ende hat; und
einem Stoßdämpfer (22), der zwischen das zweite Ende des Hebels (20) und eine der hinteren Gabelspitzen (14) geschaltet ist.

2. Hintere Stoßdämpfergruppe nach Anspruch 1, **dadurch gekennzeichnet, dass** der mittlere Verbindungspunkt des Hebels (20) dafür geeignet ist, mit dem Rahmen (10) des Fahrrads drehgelenkig verbunden zu werden.

## Revendications

1. Ensemble d'amortisseur arrière pour une bicyclette, comprenant :
une paire de fourches arrière inférieures (12) conçues pour être reliées de façon pivotante à un cadre (10) de bicyclette et comportant un bas de fourche arrière (14) formé à une extrémité de chaque fourche arrière inférieure (12),
une paire de fourches arrière supérieures (16), une extrémité de chaque fourche arrière supérieure (16) étant reliée de façon pivotante à un des bas de fourche arrière (14),
un levier (20) conçu pour être relié de façon pivotante au cadre (10) de la bicyclette et ayant un point de raccord central, une première extrémité reliée de façon pivotante à la paire de fourches arrière supérieures (16) et une seconde extrémité,
un amortisseur de chocs (22) relié de façon pivotante entre la seconde extrémité du levier (20) et un des bas de fourche arrière (14).

2. Ensemble d'amortisseur arrière selon la revendication 1, dans lequel le point de raccord central du levier (20) est conçu pour être relié de façon pivotante au cadre (10) de la bicyclette.
